# EUROPEAN PATENT APPLICATION

(11) **EP 2 500 316 A1**
(43) Date of publication of application: **19.09.2012**
(21) Application number: 10830000.5
(22) Date of filing: 11.11.2010
(51) Int. Cl.: C01B 31/36, C04B 35/565

(54) **SILICON CARBIDE POWDER COMPOSITION AND METHOD FOR PRODUCING SILICON CARBIDE MOLDED BODY USING SAME**

(30) Priority: 12.11.2009 JP 2009258649
(71) Applicant: Shin-Etsu Chemical Co., Ltd., Tokyo 100-0004 (JP)
(72) Inventor: AOKI, Yoshitaka, Annaka-shi Gunma 379-0224 (JP)
(74) Representative: Hallybone, Huw George
(86) International application number: PCT/JP2010/070145
(87) International publication number: WO 2011/059041

(57) **Abstract**

A silicon carbide powder composition comprising a silicon carbide powder obtained by thermally decomposing a silicone cured product within a non-oxidizing atmosphere and an organic binder. The composition can be sintered to form a silicon carbide molded product having a complex shape even without the inclusion of a sintering assistant.

## Description

### Technical Field

The present invention relates to a silicon carbide powder composition and a method of producing a silicon carbide molded product using the composition.

### Background Art

Silicon carbide ceramics are chemically stable at both normal temperatures and high temperatures, and also exhibit excellent mechanical strength at high temperature, and they are therefore used as high-temperature materials. In recent years, in the field of semiconductor production, molded products composed of high-purity silicon carbide ceramic sintered compacts having excellent heat resistance and creep resistance have started to be used as boards or process tubes or the like within steps for conducting heat treatments of semiconductor wafers, or conducting thermal diffusion of trace elements within semiconductor wafers. In these steps, if an impurity element that is detrimental to semiconductors is incorporated within the silicon carbide ceramic molded product being used, then the impurity element may migrate from the board or process tube made from the molded product, and permeate into and contaminate the wafer. Accordingly, it is desirable that silicon carbide ceramic molded products used in this type of application are as pure as possible.

Known methods of producing silicon carbide molded products include a method that uses a sintering assistant such as boron (Patent Document 1), a method in which molten silicon is brought into contact with a molded product comprising mainly silicon carbide and carbon (Non-Patent Document 1), and a method in which SiO gas is caused to permeate into a molded product comprising mainly silicon carbide and carbon (Patent Document 2).

However, in the method where a sintering assistant such as boron is used, the sintering assistant causes the resulting silicon carbide sintered compact to become contaminated with impurity elements such as boron, meaning the sintered compact cannot be used in the field of semiconductor device production. In the method that employs contact with molten silicon and the method that involves permeation of SiO gas into a molded product, because a prepared molded product is subjected to further treatment, additional steps are required, and special equipment is also required for performing those steps.

### Prior Art Documents

### Patent Documents

Patent Document 1: JP 2000-247744 A
Patent Document 2: JP 2007-145665 A

### Non-Patent Document

Non-Patent Document 1: "SiC-based Novel Ceramic Materials", edited by the 124th Committee on High-Temperature Ceramic Materials of the Japan Society for the Promotion of Science.

### Summary of the Invention

### Problems Invention Aims to Solve

An object of the present invention is to address the problems associated with the conventional technology described above, and provide a composition that is ideal for simply producing a high-purity silicon carbide molded product, and a method of producing a high-purity silicon carbide ceramic molded product using the composition.

### Means for Solution of the Problems

As a result of intensive investigation aimed at achieving the above object, the inventors of the present invention provide the invention described below.

In other words, a first aspect of the present invention provides a silicon carbide powder composition comprising a silicon carbide powder that is obtained by thermally decomposing a silicone cured product within a non-oxidizing atmosphere, and an organic binder.
A second aspect of the present invention provides a method of producing a silicon carbide molded product, the method comprising:
molding the silicon carbide powder composition described above to obtain a silicon carbide powder molded product,
subjecting the silicon carbide powder molded product to a degreasing treatment, and
subsequently subjecting the degreased silicon carbide powder molded product to a sintering within a non-oxidizing atmosphere.
A third aspect of the present invention provides a silicon carbide molded product that is obtained using the method described above.

### Effects of the Invention

Because the silicon carbide powder composition of the present invention does not require the inclusion of a sintering assistant, the purity can be enhanced at the composition preparation stage, meaning a molded product composed of a high-purity silicon carbide sintered compact can be produced with relative ease.

Further, because silicon carbide is usually difficult to sinter, only sintered compacts of simple shapes can be produced, but by employing the method of producing a silicon carbide molded product of the present invention, even silicon carbide molded products of complex shapes can be produced relatively easily.

These effects are due to the fine structure of the silicon carbide powder particles used in the present invention. In comparative examples 1 and 2 described below, because a commercially available silicon carbide powder was used without using a sintering assistant, the sintering did not proceed, but in the examples of the present invention, the sintering proceeded favorably even without the use of a sintering assistant.

### Embodiments of Currying Out the Invention

A more detailed description of the present invention is presented below. In this description, "roo temperature" refers to the ambient temperature, which can typically change within a range from 10 to 35°C.

### - Silicon Carbide Powder Composition -

The silicon carbide powder composition of the present invention comprises a specific silicon carbide powder and an organic binder as essential components.

### - Silicon Carbide Powder

The silicon carbide powder used in the composition of the present invention is a silicon carbide powder that is obtained by a calcination of a silicone cured product.

The silicone cured product is obtained by curing a curable silicone composition, and a conventional composition can be used as the curable silicone composition. There are no particular limitations on the curing mechanism of the curable silicone composition, and any curable silicone composition of any curing type can be used. Specific examples thereof include organic peroxide-curable, radiation-curable, addition-curable and condensation-curable silicone compositions. Organic peroxide-curable and radiation-curable silicone compositions are advantageous in terms of achieving a higher degree of purity for the obtained silicon carbide powder, and the total amount of impurity elements within the obtained silicon carbide powder can be suppressed to not more than 1 ppm, preferably not more than 0.5 ppm, and more preferably 0.1 ppm or less. Examples of the impurity elements include Fe, Cr, Ni, Al, Ti, Cu, Na, Zn, Ca, Zr, Mg and B, and the total amount of all these impurity elements can be suppressed in the manner described above.

Examples of organic peroxide-curable silicone compositions include silicone compositions that undergo curing via a radical polymerization, in the presence of an organic peroxide, of a linear organopolysiloxane having alkenyl groups such as vinyl groups at a molecular chain terminal (either at one terminal or at both terminals), at non-terminal positions within the molecular chain, or at both of these positions.

Examples of radiation-curable silicone compositions include ultraviolet light-curable silicone compositions and electron beam-curable silicone compositions.

Examples of ultraviolet light-curable silicone compositions include silicone compositions that undergo curing as a result of the energy of ultraviolet light having a wavelength of 200 to 400 nm. In this case, there are no particular limitations on the curing mechanism. Specific examples of these compositions include acrylic silicone-based silicone compositions comprising an organopolysiloxane containing acryloyl groups or methacryloyl groups, and a photopolymerization initiator, mercapto-vinyl addition polymerization-based silicone compositions comprising a mercapto group-containing organopolysiloxane, an organopolysiloxane that contains alkenyl groups such as vinyl groups, and a photopolymerization initiator, addition reaction-based silicone compositions that use the same platinum group metal-based catalysts as heat-curable, addition reaction-type compositions, and cationic polymerization-based silicone compositions comprising an organopolysiloxane containing epoxy groups, and an onium salt catalyst, and any of these compositions can be used as an ultraviolet light-curable silicone composition.

Examples of electron beam-curable silicone compositions that can be used include any of the silicone compositions that are cured by a radical polymerization that is initiated by irradiating an organopolysiloxane containing radical polymerizable groups with an electron beam.

Examples of addition-curable silicone compositions include silicone compositions that are cured by reacting an aforementioned linear organopolysiloxane having alkenyl groups with an organohydrogenpolysiloxane (via a hydrosilylation addition reaction) in the presence of a platinum group metal-based catalyst.

Examples of condensation-curable silicone compositions include silicone compositions that are cured by conducting a reaction between an organopolysiloxane with both terminals blocked with silanol groups, and an organohydrogenpolysiloxane or a hydrolyzable silane such as a tetraalkoxysilane or an organotrialkoxysilane and/or a partial hydrolysis-condensation product thereof, in the presence of a condensation reaction catalyst such as an organotin-based catalyst, or silicone compositions that are cured by reacting an organopolysiloxane with both terminals blocked with trialkoxy groups, dialkoxyorgano groups, trialkoxysiloxyethyl groups or dialkoxyorganosiloxyethyl groups, in the presence of a condensation reaction catalyst such as an organotin-based catalyst.

However, from the viewpoint of avoiding, as far as possible, the incorporation of impurity elements, radiation-curable silicone compositions and organic peroxide-curable silicone compositions are preferred.

Each of the above curable silicone compositions is described below in detail.

### - Organic Peroxide-Curable Silicone Compositions

Specific examples of organic peroxide-curable silicone compositions include compositions comprising:
(a) an organopolysiloxane containing at least two alkenyl groups bonded to silicon atoms,
(b) an organic peroxide, and, as an optional component:
(c) an organohydrogenpolysiloxane containing at least two hydrogen atoms bonded to silicon atoms (namely, SiH groups), in an amount that provides 0.1 to 2 mols of hydrogen atoms bonded to silicon atoms within the component (c) per 1 mol of alkenyl groups within the entire curable silicone composition.

### -- Component (a)

The organopolysiloxane of the component (a) is the base polymer of the organic peroxide-curable silicone composition. There are no particular limitations on the polymerization degree of the organopolysiloxane of the component (a), and organopolysiloxanes that are liquid at 25°C through to natural rubber-type organopolysiloxanes can be used as the component (a), but the average polymerization degree is preferably within a range from approximately 50 to 20,000, more preferably from approximately 100 to 10,000, and still more preferably from approximately 100 to 2,000. Further, from the viewpoint of ease of availability of the raw material, the organopolysiloxane of the component (a) is preferably basically a linear structure with no branching, in which the molecular chain is composed of repeating diorganosiloxane units (R¹₂SiO_{2/2} units) and both molecular chain terminals are blocked with triorganosiloxy groups (R¹₃SiO_{1/2}) or hydroxydiorganosiloxy groups ((HO)R¹₂SiO_{1/2} units), or a cyclic structure with no branching in which the molecular chain is composed of repeating diorganosiloxane units, although the structure may partially include some branched structures such as trifunctional siloxane units or SiO₂ units. In the above description, R¹ is as defined below within the description of formula (1).

Examples of organopolysiloxanes that can be used as the component (a) include organopolysiloxanes having at least two alkenyl groups within each molecule, as represented by an average composition formula (1) shown below:

R¹ₐSiO(₄₋ₐ)_{/2} (1)

wherein R¹ represents identical or different, unsubstituted or substituted monovalent hydrocarbon groups of 1 to 10 carbon atoms, and preferably 1 to 8 carbon atoms, 50 to 99 mol% of the R¹ groups are alkenyl groups, and a represents a positive number within a range from 1.5 to 2.8, preferably from 1.8 to 2.5, and more preferably from 1.95 to 2.05.

Specific examples of R¹ include alkyl groups such as a methyl group, ethyl group, propyl group, butyl group, pentyl group and hexyl group; aryl groups such as a phenyl group, tolyl group, xylyl group and naphthyl group; cycloalkyl groups such as a cyclopentyl group and cyclohexyl group; alkenyl groups such as a vinyl group, allyl group, propenyl group, isopropenyl group and butenyl group; and groups in which some or all of the hydrogen atoms within one of the above hydrocarbon groups have each been substituted with a halogen atom such as a fluorine atom, bromine atom or chlorine atom, or a cyano group or the like, including a chloromethyl group, chloropropyl group, bromoethyl group, trifluoropropyl group and cyanoethyl group, although from the viewpoint of achieving high purity, the R¹ groups are preferably composed solely of hydrocarbon groups.

In this case, at least two of the R¹ groups represent alkenyl groups (and in particular, alkenyl groups that preferably contain from 2 to 8 carbon atoms, and more preferably from 2 to 6 carbon atoms). The alkenyl group content among the total of all the organic groups bonded to silicon atoms (that is, among all the unsubstituted and substituted monovalent hydrocarbon groups represented by R¹ within the above average composition formula (1)) is preferably within a range from 50 to 99 mol%, and more preferably from 75 to 95 mol%. In those cases where the organopolysiloxane of the component (a) has a linear structure, these alkenyl groups may be bonded solely to silicon atoms at the molecular chain terminals, solely to non-terminal silicon atoms within the molecular chain, or to both these types of silicon atoms.

### -- Component (b)

The component (b) is an organic peroxide that is used as a catalyst for accelerating the cross-linking reaction of the component (a) in the organic peroxide-curable organopolysiloxane composition. Any conventional organic peroxide can be used as the component (b), provided it is capable of accelerating cross-lining reaction of the component (a). Specific examples of the component (b) include benzoyl peroxide, 2,4-dichlorobenzoyl peroxide, p-methylbenzoyl peroxide, o-methylbenzoyl peroxide, 2,4-dicumyl peroxide, 2,5-dimethyl-bis(2,5-t-butylperoxy)hexane, di-t-butyl peroxide, t-butyl perbenzoate and 1,1-bis(t-butylperoxycarboxy)hexane, although this is not an exhaustive list.

The amount added of the component (b) must be an amount that is effective as a catalyst for accelerating the cross-linking reaction of the component (a). This amount is preferably within a range from 0.1 to 10 parts by mass, and more preferably from 0.2 to 2 parts by mass, per 100 parts by mass of the component (a). If the amount added of the component (b) is less than 0.1 parts by mass per 100 parts by mass of the component (a), then the time required for curing lengthens, which is economically undesirable. Further, if the amount added exceeds 10 parts by mass per 100 parts by mass of the component (a), then foaming caused by the component (b) tends to occur, and the strength and heat resistance of the cured reaction product tend to be adversely affected.

### -- Component (c)

The organohydrogenpolysiloxane of the component (c), which is an optional component, contains at least two (typically from 2 to 200), and preferably three or more (typically from 3 to 100) hydrogen atoms bonded to silicon atoms (SiH groups). Even when only the component (a) is used, curing can be achieved by adding the component (b) and heating, but by also adding the component (c), because the reaction with the component (a) proceeds readily, curing can be performed at a lower temperature and within a shorter period of time than the case where only the component (a) is used. There are no particular limitations on the molecular structure of the component (c), and conventionally produced linear, cyclic, branched, or three dimensional network (resin-like) organohydrogenpolysiloxanes can be used as the component (c). In those cases where the component (c) has a linear structure, the SiH groups may be bonded solely to silicon atoms at the molecular chain terminals or solely to non-terminal silicon atoms within the molecular chain, or may also be bonded to both these types of silicon atoms. Furthermore, the number of silicon atoms within each molecule (or the polymerization degree) is typically within a range from 2 to 300, and is preferably from 4 to approximately 150. organohydrogenpolysiloxane that is liquid at room temperature (25°C) can be used particularly favorably as the component (c).

Examples of the component (c) include organohydrogenpolysiloxanes represented by an average composition formula (2) shown below:

R²_{b}H_{c}SiO_{(4-b-c)/2} (2)

wherein R² represents identical or different, unsubstituted or substituted monovalent hydrocarbon groups containing no aliphatic unsaturated bonds and containing 1 to 10 carbon atoms, and preferably 1 to 8 carbon atoms, and b and c represent positive numbers that preferably satisfy 0.7≤b≤2.1, 0.001≤c≤1.0 and 0.8≤b+c≤3.0, and more preferably satisfy 1.0≤b≤2.0, 0.01≤c≤1.0 and 1.5≤b+c≤2.5.
Examples of R² include the same groups as those described above for R¹ within the above average composition formula (1) (but excluding the alkenyl groups).

Specific examples of organohydrogenpolysiloxanes represented by the above average composition formula (2) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, cyclic copolymers of methylhydrogensiloxane and dimethylsiloxane, methylhydrogenpolysiloxane with both terminals blocked with trimethylsiloxy groups, copolymers of methylhydrogensiloxane and dimethylsiloxane with both terminals blocked with trimethylsiloxy groups, dimethylpolysiloxane with both terminals blocked with methylhydrogensiloxy groups, copolymers of methylhydrogensiloxane and dimethylsiloxane with both terminals blocked with methylhydrogensiloxy groups, copolymers of methylhydrogensiloxane and diphenylsiloxane with both terminals blocked with trimethylsiloxy groups, copolymers of methylhydrogensiloxane, diphenylsiloxane and dimethylsiloxane with both terminals blocked with trimethylsiloxy groups, copolymers of methylhydrogensiloxane, methylphenylsiloxane and dimethylsiloxane with both terminals blocked with trimethylsiloxy groups, copolymers of methylhydrogensiloxane, diphenylsiloxane and dimethylsiloxane with both terminals blocked with methylhydrogensiloxy groups, copolymers of methylhydrogensiloxane, methylphenylsiloxane and dimethylsiloxane with both terminals blocked with methylhydrogensiloxy groups, copolymers composed of (CH₃)₂HSiO_{1/2} units, (CH₃)₂SiO_{2/2} units and SiO_{4/2} units, copolymers composed of (CH₃)₂HSiO_{1/2} units and SiO_{4/2} units, and copolymers composed of (CH₃)₂HSiO)_{1/2} units, SiO_{4/2} units, and (C₆H₅)₃SiO_{1/2} units.

The amount added of the component (c) is preferably within a range from 0 to 100 parts by mass, and more preferably from 0 to 50 parts by mass, per 100 parts by mass of the component (a). If the amount added of the component (c) exceeds 100 parts by mass per 100 parts by mass of the component (a), then foaming caused by the component (c) tends to occur, and the strength and heat resistance of the cured reaction product tend to be adversely affected.

### - Ultraviolet Light-Curable Silicone Compositions

Specific examples of ultraviolet light-curable silicone compositions include compositions comprising:
(d) an ultraviolet light-reactive organopolysiloxane, and
(e) a photopolymerization initiator.

### -- Component (d)

The ultraviolet light-reactive organopolysiloxane of the component (d) typically functions as the base polymer in the ultraviolet light-curable silicone composition. Although there are no particular limitations on the component (d), the component (d) is preferably an organopolysiloxane containing at least two, more preferably from 2 to 20, and most preferably from 2 to 10, ultraviolet light-reactive groups within each molecule. The plurality of ultraviolet light-reactive groups that exist within this organopolysiloxane may be the same or different.

From the viewpoint of ease of availability of the raw material, the organopolysiloxane of the component (d) is preferably basically either a linear structure with no branching, in which the molecular chain (the main chain) is composed of repeating diorganosiloxane units (R¹₂SiO_{2/2} units), and both molecular chain terminals are blocked with triorganosiloxy groups (R¹₃SiO_{1/2}), or a cyclic structure with no branching in which the molecular chain is composed of repeating diorganosiloxane units, although the structure may partially include some branched structures such as trifunctional siloxane units or SiO₂ units. In the above description, R¹ is the same as defined above in relation to formula (1). In those cases where the organopolysiloxane of the component (d) has a linear structure, the ultraviolet light-reactive groups may exist solely at the molecular chain terminals or solely at non-terminal positions within the molecular chain, or may also exist at both these positions, although structures containing ultraviolet light-reactive groups at least at both molecular chain terminals are preferred.

Examples of the ultraviolet light-reactive groups include alkenyl groups such as a vinyl group, allyl group and propenyl group; alkenyloxy groups such as a vinyloxy group, allyloxy group, propenyloxy group and isopropenyloxy group; aliphatic unsaturated groups other than alkenyl groups, such as an acryloyl group and methacryloyl group; as well as an epoxy group and hydrosilyl group, and of these, an acryloyl group, methacryloyl group, mercapto group, epoxy group or hydrosilyl group is preferred, and an acryloyl group or methacryloyl group is particularly desirable.

Although there are no particular limitations on the viscosity of the organopolysiloxane, the viscosity at 25°C is preferably within a range from 100 mPa·s to 1,000,000 mPa·s, more preferably from 200 to 500,000 mPa·s, and still more preferably from 200 to 100,000 mPa·s.

Examples of preferred forms of the component (d) include organopolysiloxanes containing at least two ultraviolet light-reactive groups, represented by either a general formula (3a) shown below:

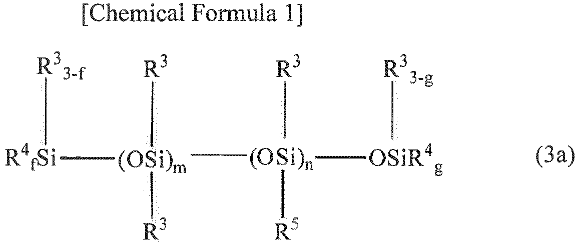

wherein R³ represents identical or different, unsubstituted or substituted monovalent hydrocarbon groups that contain no ultraviolet light-reactive groups, R⁴ represents identical or different groups that contain an ultraviolet light-reactive group, R⁵ represents identical or different groups that contain an ultraviolet light-reactive group, m represents an integer of 5 to 1,000, n represents an integer of 0 to 100, f represents an integer of 0 to 3, and g represents an integer of 0 to 3, provided that f+g+n≥2,
or a general formula (3b) shown below:

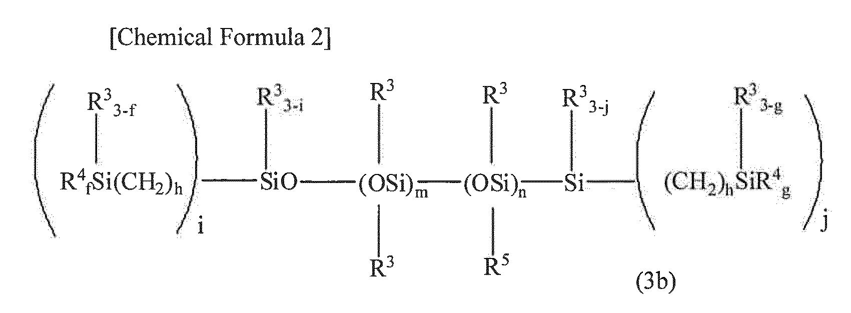

wherein R³, R⁴, R⁵, m, n, f and g are as defined above for the general formula (3a), h represents an integer of 2 to 4, and i and j each represents integer of 1 to 3, provided that fi+gj+n≥2.

In the above general formulas (3a) and (3b), R³ represents identical or different, unsubstituted or substituted monovalent hydrocarbon groups that contain no ultraviolet light-reactive groups and preferably contain from 1 to 20 carbon atoms, more preferably from 1 to 10 carbon atoms, and most preferably from 1 to 8 carbon atoms. Examples of the monovalent hydrocarbon groups represented by R³ include alkyl groups such as a methyl group, ethyl group, propyl group, butyl group, pentyl group and hexyl group; aryl groups such as a phenyl group, tolyl group, xylyl group and naphthyl group; cycloalkyl groups such as a cyclopentyl group, cyclohexyl group and cyclopentyl group; aralkyl groups such as a benzyl group and phenylethyl group; and groups in which some or all of the hydrogen atoms within one of the above hydrocarbon groups have each been substituted with a halogen atom, cyano group or carboxyl group or the like, including a chloromethyl group, chloropropyl group, bromoethyl group, trifluoropropyl group, cyanoethyl group and 3-cyanopropyl group, and of these, a methyl group or phenyl group is preferred, and a methyl group is particularly desirable. Furthermore, the monovalent hydrocarbon group represented by R³ may also include one or more sulfonyl groups, ether linkages (-O-) and/or carbonyl groups or the like within the group structure.

In the above general formulas (3a) and (3b), examples of the ultraviolet light-reactive groups contained within the groups R⁴ and R⁵ include alkenyl groups such as a vinyl group, allyl group and propenyl group; alkenyloxy groups such as a vinyloxy group, allyloxy group, propenyloxy group and isopropenyloxy group; aliphatic unsaturated groups other than alkenyl groups, such as an acryloyl group and methacryloyl group; as well as a mercapto group, epoxy group and hydrosilyl group, and of these, an acryloyl group, methacryloyl group, epoxy group or hydrosilyl group is preferred, and an acryloyl group or methacryloyl group is particularly desirable. Accordingly, the groups comprising an ultraviolet light-reactive group represented by R⁴ and R⁵ are monovalent groups that contain any of the above ultraviolet light-reactive groups, and specific examples of R⁴ and R⁵ include a vinyl group, allyl group, 3-glycidoxypropyl group, 2-(3,4-epoxycyclohexyl)ethyl group, 3-methacryloyloxypropyl group, 3-acryloyloxypropyl group, 3-mercaptopropyl group, 2-{bis(2-methacryloyloxyethoxy)methylsilyl} ethyl group, 2-{bis(2-acryloyloxyethoxy)methylsilyl}ethyl group, 2-{(2-acryloyloxyethoxy}dimethylsilyl}ethyl group, 2-{bis(1,3-dimethacryloyloxy-2-propoxy)methylsilyl}ethyl group, 2-{(1,3-dimethacryloyloxy-2-propoxy)dimethylsilyl} ethyl group, 2-{bis(1-acryloyloxy-3-methacryloyloxy-2-propoxy)methylsilyl}ethyl group and 2-{bis(1-acryloyloxy-3-methacryloyloxy-2-propoxy)dimethylsilyl}ethyl group, and examples of preferred groups include a 3-methacryloyloxypropyl group, 3-acryloyloxypropyl group, 2-{bis(2-methacryloyloxyethoxy)methylsilyl}ethyl group, 2-{bis(2-acryloyloxyethoxy)methylsilyl}ethyl group, 2-{(2-acryloyloxyethoxy)dimethylsilyl}ethyl group, 2-{(1,3-dimethacryloyloxy-2-propoxy)dimethylsilyl}ethyl group, 2-{bis(1-acryloyloxy-3-ethacryloyloxy-2-propoxy)methylsilyl}ethyl group and 2-{bis(1-acryloyloxy-3-ethacryloyloxy-2-propoxy)dimethylsilyl}ethyl group. R⁴ and R⁵ may be either the same or different, and individual R⁴ and R⁵ groups may be the same as, or different from, other R⁴ and R⁵ groups.

In the above general formulas (3a) and (3b), m is typically an integer of 5 to 1,000, preferably an integer of 10 to 800, and more preferably an integer of 50 to 500. n is typically an integer of 0 to 100, preferably an integer of 0 to 50, and more preferably an integer of 0 to 20. f is an integer of 0 to 3, preferably an integer of 0 to 2, and more preferably 1 or 2. g is an integer of 0 to 3, preferably an integer of 0 to 2, and more preferably 1 or 2. In the above general formula (3b), h is typically an integer of 2 to 4, and is preferably 2 or 3. Each of i and j represents integer of 1 to 3, and preferably an integer of 1 or 2. Moreover, as described above, the organopolysiloxanes represented by the above general formulas (3a) and (3b) contain at least two of the above ultraviolet light-reactive groups, and consequently f+g+n≥2 in the formula (3a), and fi+gj+n≥2 in the formula (3b).

Specific examples of organopolysiloxanes represented by the above formulas (3a) and (3b) include the compounds shown below.

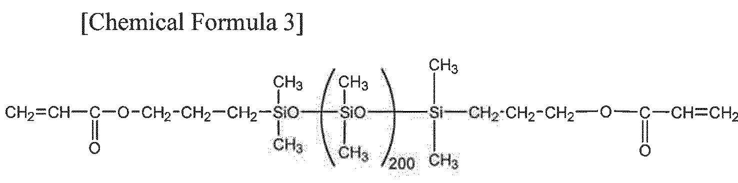

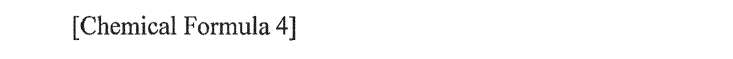

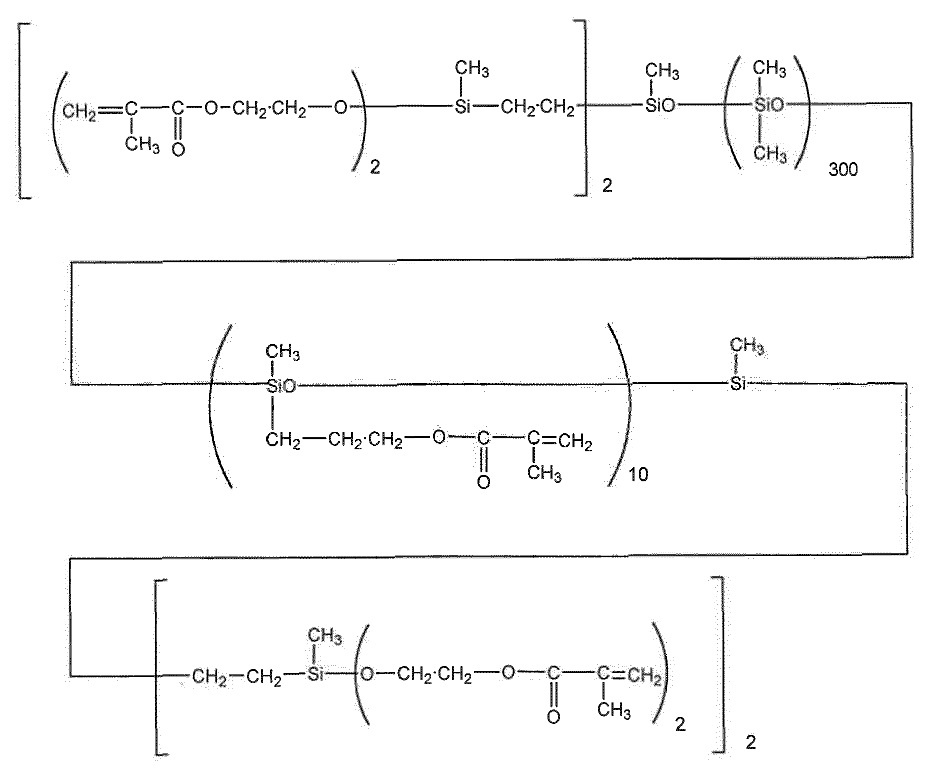

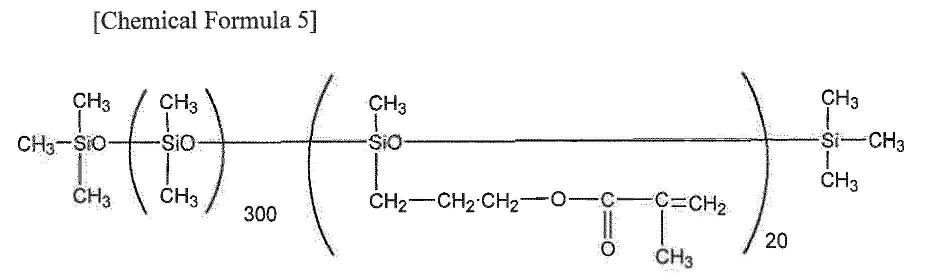

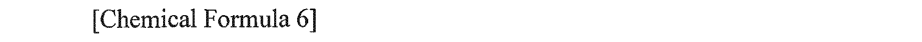

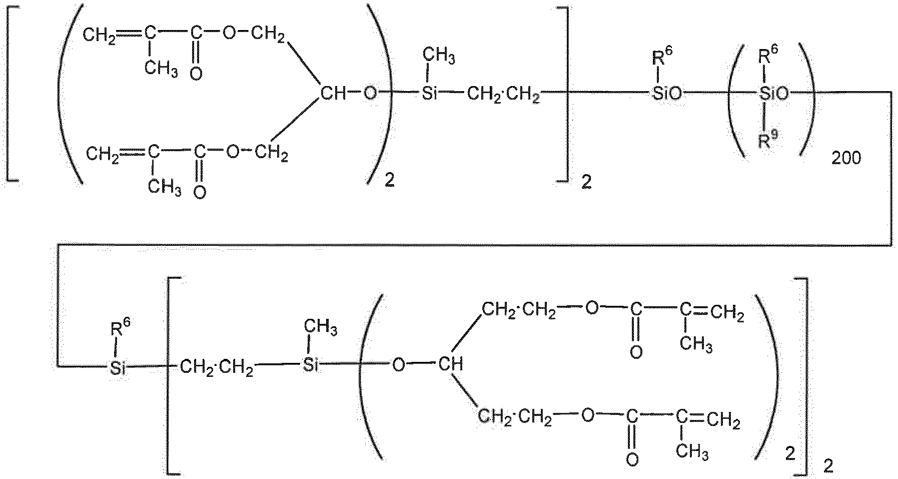

In the above formulas, the R⁶ groups are 90 mol% methyl groups and 10 mol% phenyl groups.

### -- Component (e)

The photopolymerization initiator of the component (e) has the effect of accelerating the photopolymerization of the ultraviolet light-reactive groups within the above component (d). There are no particular limitations on the component (e), and specific examples thereof include acetophenone, propiophenone, benzophenone, xanthol, fluorein, benzaldehyde, anthraquinone, triphenylamine, 4-methylacetophenone, 3-pentylacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoin, benzoin methyl ether, benzoin butyl ether, bis(4-dimethylaminophenyl) ketone, benzyl methoxy acetal, 2-chlorothioxanthone, diethylacetophenone, 1-hydroxychlorophenyl ketone, 1-hydroxycyclohexyl phenyl ketone, 2-methyl-(4-(methylthio)phenyl)-2-morpholino-1-propane, 2,2-dimethoxy-2-phenylacetophenone, diethoxyacetophenone, and 2-hydroxy-2-methyl-1-phenylpropan-1-one. From the viewpoint of ensuring high purity, benzophenone, 4-methoxyacetophenone, 4-methylbenzophenone, diethoxyacetophenone, 1-hydroxycyclohexyl phenyl ketone and 2-hydroxy-2-methyl-1-phenylpropan-1-one are preferred, and diethoxyacetophenone, 1-hydroxycyclohexyl phenyl ketone and 2-hydroxy-2-methyl-1-phenylpropan-1-one are particularly desirable. Any one of these photopolymerization initiators may be used alone, or two or more different initiators may be used in combination.

Although there are no particular limitations on the amount added of the component (e), the amount is preferably within a range from 0.01 to 10 parts by mass, more preferably from 0.1 to 3 parts by mass, and still more preferably from 0.5 to 3 parts by mass, per 100 parts by mass of the component (d). Provided the amount added falls within the above range, curing of the silicone composition can be more readily controlled.

### - Addition-Curable Silicone Compositions

Specific examples of addition-curable silicone compositions include compositions comprising:
(f) an organopolysiloxane containing at least two alkenyl groups bonded to silicon atoms,
(g) an organohydrogenpolysiloxane containing at least two hydrogen atoms bonded to silicon atoms (namely, SiH groups), in an amount that provides 0.1 to 5 mols of hydrogen atoms bonded to silicon atoms within the component (g) per 1 mol of alkenyl groups within the entire curable silicone composition, and
(h) an effective amount of a platinum group metal-based catalyst.

### -- Component (f)

The organopolysiloxane of the component (f) is the base polymer of the addition-curable silicone composition, and contains at least two alkenyl groups bonded to silicon atoms. Conventional organopolysiloxanes can be used as the component (f). The weight-average molecular weight of the organopolysiloxane of the component (f), measured by gel permeation chromatography (hereinafter abbreviated as GPC) and referenced against polystyrene standards, is preferably within a range from approximately 3,000 to 300,000. Moreover, the viscosity at 25°C of the organopolysiloxane of the component (f) is preferably within a range from approximately 100 to 1,000,000 mPa·s, and is more preferably from approximately 1,000 to 100,000 mPa·s. If the viscosity is 100 mPa·s or less, then the thread-forming ability of the composition is poor, and narrowing the diameter of fibers becomes difficult, whereas if the viscosity is 1,000,000 mPa·s or greater, then handling becomes difficult. From the viewpoint of ease of availability of the raw material, the organopolysiloxane of the component (f) is basically either a linear structure with no branching, in which the molecular chain (the main chain) is composed of repeating diorganosiloxane units (R⁷₂SiO_{2/2} units), and both molecular chain terminals are blocked with triorganosiloxy groups (R⁷₃SiO_{1/2}), or a cyclic structure with no branching in which the molecular chain is composed of repeating diorganosiloxane units, although the structure may partially include some branched structures including R⁷SiO_{3/2} units and/or SiO_{4/2} units. In the above description, R⁷ is the same as defined below within the description of formula (4).

Examples of organopolysiloxanes that can be used as the component (f) include organopolysiloxanes having at least two alkenyl groups within each molecule, as represented by an average composition formula (4) shown below:

R⁷₁SiO(₄₋₁)_{/2} (4)

wherein R⁷ represents identical or different, unsubstituted or substituted monovalent hydrocarbon groups of 1 to 10 carbon atoms, and preferably 1 to 8 carbon atoms, and 1 represents a positive number that is preferably within a range from 1.5 to 2.8, more preferably from 1.8 to 2.5, and still more preferably from 1.95 to 2.05. Examples of R⁷ include the same groups as those described above for R¹ in the average composition formula (1).

In this case, at least two of the R⁷ groups represent alkenyl groups (and in particular, alkenyl groups that preferably contain from 2 to 8 carbon atoms, and even more preferably from 2 to 6 carbon atoms). The alkenyl group content among the total of all the organic groups bonded to silicon atoms (that is, among all the unsubstituted and substituted monovalent hydrocarbon groups represented by R⁷ within the above average composition formula (4)) is preferably within a range from 50 to 99 mol%, and more preferably from 75 to 95 mol%. In those cases where the organopolysiloxane of the component (f) has a linear structure, these alkenyl groups may be bonded solely to silicon atoms at the molecular chain terminals or solely to non-terminal silicon atoms within the molecular chain, or may also be bonded to both these types of silicon atoms, but from the viewpoints of the composition curing rate and the physical properties of the resulting cured product and the like, at least one alkenyl group is preferably bonded to a silicon atom at a molecular chain terminal.

### -- Component (g)

The organohydrogenpolysiloxane of the component (g) contains at least two (typically from 2 to 200), and preferably three or more (typically from 3 to 100) hydrogen atoms bonded to silicon atoms (SiH groups). The component (g) reacts with the component (f) and functions as a cross-linking agent. There are no particular limitations on the molecular structure of the component (g), and conventionally produced linear, cyclic, branched, or three dimensional network (resin-like) organohydrogenpolysiloxanes can be used as the component (b). In those cases where the component (g) has a linear structure, the SiH groups may be bonded solely to silicon atoms at the molecular chain terminals or solely to non-terminal silicon atoms within the molecular chain, or may also be bonded to both these types of silicon atoms. Furthermore, the number of silicon atoms within each molecule (or the polymerization degree) is typically within a range from approximately 2 to 300, and is preferably from approximately 4 to 150. An organohydrogenpolysiloxane that is liquid at room temperature (25°C) can be used particularly favorably as the component (g).

Examples of the component (g) include organohydrogenpolysiloxanes represented by an average composition formula (5) shown below.

R⁸ₚH_{q}SiO_{(4-p-q)/2} (5)

wherein R⁸ represents identical or different, unsubstituted or substituted monovalent hydrocarbon groups containing no aliphatic unsaturated bonds and containing 1 to 10 carbon atoms, and preferably 1 to 8 carbon atoms, and p and q represent positive numbers that preferably satisfy 0.7≤p≤2.1, 0.001≤q≤1.0 and 0.8≤p+q≤3.0, and more preferably satisfy 1.0≤p≤2.0, 0.01≤q≤1.0 and 1.5≤p+q≤2.5.
Examples of R⁸ include the same groups as those described above for R¹ in the average composition formula (1) (but excluding the alkenyl groups).

Specific examples of organohydrogenpolysiloxanes represented by the above average composition formula (3) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxane, cyclic copolymers of methylhydrogensiloxane and dimethylsiloxane, methylhydrogenpolysiloxane with both terminals blocked with trimethylsiloxy groups, copolymers of methylhydrogensiloxane and dimethylsiloxane with both terminals blocked with trimethylsiloxy groups, dimethylpolysiloxane with both terminals blocked with methylhydrogensiloxy groups, copolymers of methylhydrogensiloxane and dimethylsiloxane with both terminals blocked with methylhydrogensiloxy groups, copolymers of methylhydrogensiloxane and diphenylsiloxane with both terminals blocked with trimethylsiloxy groups, copolymers of ethylhydrogensiloxane, diphenylsiloxane and dimethylsiloxane with both terminals blocked with trimethylsiloxy groups, copolymers of methylhydrogensiloxane, methylphenylsiloxane and dimethylsiloxane with both terminals blocked with trimethylsiloxy groups, copolymers of methylhydrogensiloxane, diphenylsiloxane and dimethylsiloxane with both terminals blocked with methylhydrogensiloxy groups, copolymers of methylhydrogensiloxane, methylphenylsiloxane and dimethylsiloxane with both terminals blocked with methylhydrogensiloxy groups, copolymers composed of (CH₃)₂HSiO_{1/2} units, (CH₃)₂SiO_{2/2} units and SiO_{4/2} units, copolymers composed of (CH₃)₂HSiO_{1/2} units and SiO_{4/2} units, and copolymers composed of (CH₃)₂HSiO_{1/2} units, SiO_{4/2} units, and (C₆H₅)₃SiO_{1/2} units.

The amount added of the component (g) must be sufficient to provide from 0.1 to 5.0 mols, preferably from 0.5 to 3.0 mols, and more preferably from 0.8 to 2.0 mols, of SiH groups within this component (g) per 1 mol of alkenyl groups within the entire curable silicone composition, and in particular, per 1 mol of alkenyl groups bonded to silicon atoms within the entire curable silicone composition, and especially per 1 mol of alkenyl groups bonded to silicon atoms within the component (f). The proportion of the alkenyl groups bonded to silicon atoms within the component (f) relative to the total number of alkenyl groups that exist within the entire curable silicone composition is preferably within a range from 80 to 100 mol%, and more preferably from 90 to 100 mol%. In those cases where the component (f) is the only component that contains alkenyl groups within the entire curable silicone composition, the amount of SiH groups within the component (g) per 1 mol of alkenyl groups within the component (f) is typically within a range from 0.1 to 5.0 mols, preferably from 0.5 to 3.0 mols, and more preferably from 0.8 to 2.0 mols. If the amount added of the component (g) yields an amount of SiH groups that is less than 0.1 mols, then the time required for curing lengthens, which is economically undesirable. Further, if the amount added yields an amount of SiH groups that exceeds 5.0 mols, then foaming caused by a dehydrogenation reaction tends to occur within the curing reaction product, and the strength and heat resistance of the cured reaction product tend to be adversely affected.

### -- Component (h)

The platinum group metal-based catalyst of the component (h) is used for accelerating the addition curing reaction (the hydrosilylation reaction) between the component (f) and the component (g). Conventional platinum group metal-based catalysts can be used as the component (h), but the use of platinum or a platinum compound is preferred. Specific examples of the component (h) include platinum black, platinic chloride, chloroplatinic acid, alcohol-modified chloroplatinic acid, and complexes of chloroplatinic acid with olefins, aldehydes, vinylsiloxanes or acetylene alcohols.

The amount added of the component (h) need only be an effective catalytic amount, may be suitably increased or decreased in accordance with the desired curing reaction rate, and preferably provides a mass of the platinum group metal relative to the mass of the component (f) that falls within a range from 0.1 to 1,000 ppm, and more preferably from 0.2 to 100 ppm.

### - Condensation-Curable Silicone composition

Specific examples of condensation-curable silicone compositions include compositions comprising:
(i) an organopolysiloxane containing at least two silanol groups (namely, silicon atom-bonded hydroxyl groups) or silicon atom-bonded hydrolyzable groups, preferably at both molecular chain terminals,
(j) as an optional component, a hydrolyzable silane and/or a partial hydrolysis-condensation product thereof, and
(k) as another optional component, a condensation reaction catalyst.

### -- Component (i)

The component (i) is an organopolysiloxane that contains at least two silanol groups or silicon atom-bonded hydrolyzable groups, and functions as the base polymer of the condensation-curable silicone composition. From the viewpoint of ease of availability of the raw material, the organopolysiloxane of the component (i) is preferably basically either a linear structure with no branching, in which the molecular chain (the main chain) is composed of repeating diorganosiloxane units (R⁹₂SiO_{2/2} units), and both molecular chain terminals are blocked with triorganosiloxy groups (R⁹₃SiO_{1/2}), or a cyclic structure with no branching in which the molecular chain is composed of repeating diorganosiloxane units, although the structure may partially include some branched structures. In the above description, R⁹ represents an unsubstituted or substituted monovalent hydrocarbon group of 1 to 10 carbon atoms, and preferably 1 to 8 carbon atoms.

In the organopolysiloxane of the component (i), examples of the hydrolyzable groups other than silanol groups include acyloxy groups such as an acetoxy group, octanoyloxy group and benzoyloxy group; ketoxime groups (namely, iminoxy groups) such as a dimethyl ketoxime group, methyl ethyl ketoxime group and diethyl ketoxime group; alkoxy groups such as a methoxy group, ethoxy group and propoxy group; alkoxyalkoxy groups such as a methoxyethoxy group, ethoxyethoxy group and methoxypropoxy group; alkenyloxy groups such as a vinyloxy group, isopropenyloxy group and 1-ethyl-2-methylvinyloxy group; amino groups such as a dimethylamino group, diethylamino group, butylamino group and cyclohexylamino group; aminoxy groups such as a dimethylaminoxy group and diethylaminoxy group; and amide groups such as an N-methylacetamide group, N-ethylacetamide group and N-methylbenzamide group.

These hydrolyzable groups are preferably positioned at both molecular chain terminals of a linear diorganopolysiloxane, preferably in the form of either siloxy groups that contain two or three hydrolyzable groups, or siloxyalkyl groups that contain two or three hydrolyzable groups, including trialkoxysiloxy groups, dialkoxyorganosiloxy groups, triacyloxysiloxy groups, diacyloxyorganosiloxy groups, triiminoxysiloxy groups (namely, triketoximesiloxy groups), diiminoxyorganosiloxy groups, trialkenoxysiloxy groups, dialkenoxyorganosiloxy groups, trialkoxysiloxyethyl groups and dialkoxyorganosiloxyethyl groups.

Examples of the other monovalent hydrocarbon groups bonded to silicon atoms include the same unsubstituted and substituted monovalent hydrocarbon groups as those described above for R¹ in the average composition formula (1).

Specific examples of the component (i) include the compounds shown below.

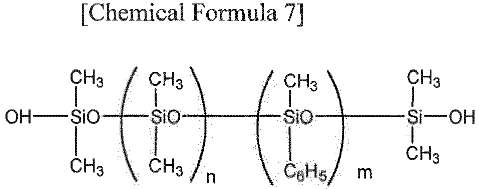

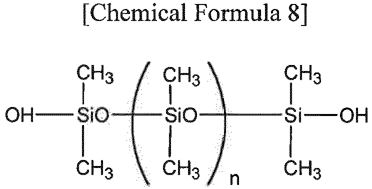

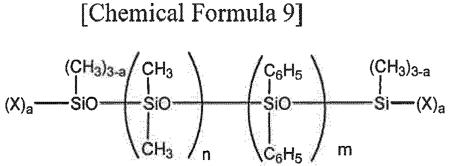

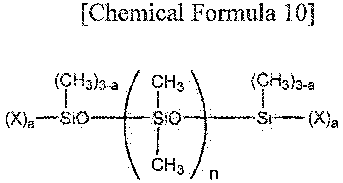

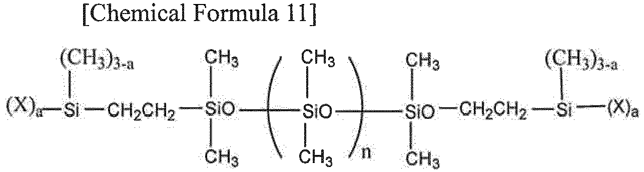

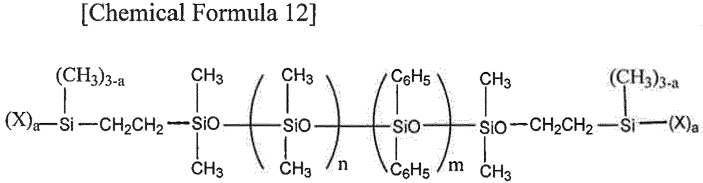

In the above formulas, X represents a hydrolyzable group other than a silanol group, a represents 1, 2 or 3, and each of n and m represents an integer of 1 to 1,000.

Specific examples of the component (i) include dimethylpolysilox with both molecular chain terminals blocked with silanol groups, copolymers of dimethylsiloxane and methylphenylsiloxane with both molecular chain terminals blocked with silanol groups, copolymers of dimethylsiloxane and diphenylpolysiloxane with both molecular chain terminals blocked with silanol groups, dimethylpolysiloxane with both molecular chain terminals blocked with trimethoxysiloxy groups, copolymers of dimethylsiloxane and methylphenylsiloxane with both molecular chain terminals blocked with trimethoxysiloxy groups, copolymers of dimethylsiloxane and diphenypolylsiloxane with both molecular chain terminals blocked with trimethoxysiloxy groups, and dimethylpolysiloxane with both molecular chain terminals blocked with 2-trimethoxysiloxyethyl groups. Any one of these compounds may be used alone, or two or more different compounds may be used in combination.

### - Component (j)

The hydrolyzable silane and/or partial hydrolysis-condensation product thereof of the component (j) is an optional component, and functions as a curing agent. In those cases where the base polymer of the component (i) is an organopolysiloxane that contains at least two silicon atom-bonded hydrolyzable groups other than silanol groups within each molecule, the addition of the component (j) to the condensation-curable silicone composition can be omitted. Silanes containing at least three silicon atom-bonded hydrolyzable groups within each molecule and/or partial hydrolysis-condensation products thereof (namely, organopolysiloxanes that still retain at least one, and preferably two or more of the hydrolyzable groups) can be used particularly favorably as the component (j).

Examples of compounds that can be used favorably as the above silane include compounds represented by a formula (6) shown below:

R¹⁰ᵣSiX₄₋ᵣ (6)

wherein R¹⁰ represents an unsubstituted or substituted monovalent hydrocarbon group of 1 to 10 carbon atoms, and preferably 1 to 8 carbon atoms, X represents a hydrolyzable group, and r represents either 0 or 1. Examples of preferred groups for R¹⁰ include alkyl groups such as a methyl group, ethyl group, propyl group, butyl group, pentyl group and hexyl group; aryl groups such as a phenyl group and tolyl group; and alkenyl groups such as a vinyl group and allyl group.

Specific examples of the component (j) include methyltriethoxysilane, vinyltriethoxysilane, vinyltriacetoxysilane, ethyl orthosilicate, and partial hydrolysis-condensation products of these compounds. Any one of these compounds may be used alone, or two or more different compounds may be used in combination.

In those cases where a hydrolyzable silane and/or partial hydrolysis-condensation product thereof is used as the component (j), the amount added of the component (j) is preferably within a range from 0.01 to 20 parts by mass, and more preferably from 0.1 to 10 parts by mass, per 100 parts by mass of the component (i). In those cases where the component (j) is used, using an amount that satisfies the above range ensures that the composition of the present invention exhibits particularly superior storage stability and curing reaction rate.

### - Component (k)

The condensation reaction catalyst of the component (k) is an optional component, and need not be used in cases where the above hydrolyzable silane and/or partial hydrolysis-condensation product thereof of the component (j) contains aminoxy groups, amino groups or ketoxime groups or the like. Examples of the condensation reaction catalyst of the component (k) include organotitanate esters such as tetrabutyl titanate and tetraisopropyl titanate; organotitanium chelate compounds such as diisopropoxybis(acetylacetonato)titanium and diisopropoxybis(ethylacetoacetate)titanium; organoaluminum compounds such as aluminum tris(acetylacetonate) and aluminum tris(ethylacetoacetate); organozirconium compounds such as zirconium tetra(acetylacetonate) and zirconium tetrabutyrate; organotin compounds such as dibutyltin dioctoate, dibutyltin dilaurate and dibutyltin di(2-ethylhexanoate); metal salts of organic carboxylic acids such as tin naphthenate, tin oleate, tin butyrate, cobalt naphthenate and zinc stearate; amine compounds or the salts thereof such as hexylamine and dodecylamine phosphate; quaternary ammonium salts such as benzyltriethylammonium acetate; lower fatty acid salts of alkali metals such as potassium acetate and lithium nitrate; dialkylhydroxylamines such as dimethylhydroxylamine and diethylhydroxylamine; and guanidyl group-containing organosilicon compounds. Any one of these catalysts may be used alone, or two or more different catalysts may be used in combination.

In those cases where a condensation reaction catalyst of the component (k) is used, there are no particular limitations on the amount added, but the amount is preferably within a range from 0.01 to 20 parts by mass, and more preferably from 0.1 to 10 parts by mass, per 100 parts by mass of the component (i). If the component (k) is used, then provided the amount satisfies the above range, the composition is economically viable from the viewpoints of the curing time and curing temperature.

A silicone cured product can be obtained by curing the above curable silicone composition. The curing conditions used at this time may be set appropriately in accordance with the type of curable silicone composition used. This point is described below in further detail.

### - The case of an Organic Peroxide-Curable Silicone Composition:

Heating a substrate that has been impregnated with the organic peroxide-curable silicone composition causes a radical reaction to proceed and the curing reaction to proceed, thereby curing the organic peroxide silicone composition. In terms of the temperature used for curing the organic peroxide silicone composition, because the curing reaction is dependent on the curable silicone composition impregnation rate or the amount of impregnation, although there are no particular limitations, the temperature is preferably within a range from 80 to 300°C, and more preferably from 150 to 250°C. Further, secondary curing may be performed if required, and the temperature during such secondary curing is preferably not less than 120°C, and more preferably within a range from 150 to 250°C. The curing time is preferably within a range from 10 minutes to 48 hours, and more preferably from 30 minutes to 24 hours.

### - The case of an Ultraviolet Light-Curable Silicone Composition:

Irradiating ultraviolet light onto a substrate that has been impregnated with the ultraviolet light-curable silicone composition causes the photopolymerization initiator to react and the curing reaction to proceed, thereby curing the ultraviolet light-curable silicone composition. In terms of the ultraviolet light irradiation conditions, because the curing reaction is dependent on the impregnation rate or the amount of impregnation, although there are no particular limitations, curing can typically be conducted by performing the ultraviolet light irradiation using ultraviolet light emitting diodes with an emission wavelength of 365 nm, under conditions including an intensity of 5 to 500 mW/cm², and preferably 10 to 200 mW/cm², and an exposure dose of 0.5 to 100 J/cm², and preferably 10 to 50 J/cm². Further, secondary curing may also be conducted if required, and the temperature during such secondary curing is preferably not less than 120°C, and more preferably within a range from 150 to 250°C. The curing time is preferably within a range from 10 minutes to 48 hours, and more preferably from 30 minutes to 24 hours.

### - The case of an Addition-Curable Silicone Composition:

Heating a substrate that has been impregnated with the addition-curable silicone composition causes a hydrosilylation reaction to proceed, thereby curing the addition-curable silicone composition. In terms of the heating temperature used, because the curing reaction is dependent on the impregnation rate or the amount of impregnation, although there are no particular limitations, the temperature is preferably within a range from 80 to 300°C, and more preferably from 100 to 200°C. Further, secondary curing may be performed if required, and the temperature during such secondary curing is preferably not less than 120°C, and more preferably within a range from 150 to 250°C. The curing time is preferably within a range from 10 minutes to 48 hours, and more preferably from 30 minutes to 24 hours.

### - The case of a Condensation-Curable Silicone Composition:

Heating a substrate that has been impregnated with the condensation-curable silicone composition causes a condensation reaction to proceed, thereby curing the condensation-curable silicone composition. In terms of the temperature used for curing the condensation-curable silicone composition, because the curing reaction is dependent on the impregnation rate or the amount of impregnation, although there are no particular limitations, the temperature is preferably within a range from 80 to 300°C, and more preferably from 100 to 200°C. Further, secondary curing may be performed if required, and the temperature during such secondary curing is preferably not less than 120°C, and more preferably within a range from 150 to 250°C. The curing time is preferably within a range from 10 minutes to 48 hours, and more preferably from 30 minutes to 24 hours.

The silicone cured product obtained in the manner described above is subjected to a heat treatment within a non-oxidizing atmosphere to obtain the aforementioned silicon carbide powder.

This heat treatment is performed under a non-oxidizing atmosphere, and preferably under an inert gas atmosphere. Examples of the inert gas include nitrogen gas, argon gas and helium gas, and argon gas is particularly desirable in terms of obtaining a high-purity silicon carbide.

Further, the heat treatment is performed at a temperature exceeding 1,500°C but not higher than 2,200°C. This heating temperature is preferably 1,600°C or higher. Furthermore, the heating temperature is preferably not higher than 2,100°C, and more preferably 2,000°C or lower. Prior to performing the heat treatment at this temperature, a heat treatment is preferably first conducted at a temperature within a range from 400 to 1,500°C under the same non-oxidizing atmosphere. The heat treatment at this temperature causes cleavage of the carbon-hydrogen bonds within the silicone, causing elimination of hydrogen from the material, but the mineralization proceeds without the elimination of carbon or silicon. Subsequent heating at a temperature exceeding 1,500°C causes elimination of carbon monoxide to start, eventually resulting in the formation of silicon carbide. If the temperature exceeds 2,200°C, then sublimation of the silicon carbide becomes too severe, which is undesirable.
The heat treatment is usually conducted by increasing the temperature from normal temperature by heating the silicone cured product, performing an initial heat treatment at 400 to 1,500°C, and then raising the temperature to a temperature range exceeding 1,500°C and performing further heat treatment at that temperature.

If required, the silicon carbide powder obtained in this manner may be finely ground using a grinding device such as a ball mill.

### - Organic Binder

Examples of the organic binder used in the composition of the present invention include methyl cellulose, carboxymethyl cellulose, hydroxyethyl cellulose and polyethylene glycol. Among these, methyl cellulose is preferred.
Typically, the amount added of the organic binder is preferably at least 1 part by mass, and more preferably 2 parts by mass or more, per 100 parts by mass of the silicon carbide powder. The amount added is preferably not more than 10 parts by mass, and more preferably 8 parts by mass or less.

### - Other Components

If required, other components besides the aforementioned silicon carbide powder and organic binder, such as plasticizers and lubricants, may also be added to the composition of the present invention, provided addition of these other components does not impair the objects or effects of the present invention. In particular, components which are converted to carbon during sintering of the composition are usually acceptable. There are no particular limitations on the plasticizers, and one example is glycerol. There are also no particular limitations on the lubricants, and examples include polyoxyalkylene-based compounds such as polyoxyethylene alkyl ethers and polyoxypropylene alkyl ethers.
Generally, it is desirable that these optional components are added in an amount of not more than 5 parts by mass per 100 parts by mass of the silicon carbide powder.

The composition of the present invention contains no sintering assistant, and does not require a sintering assistant. Examples of these sintering assistants include alumina and boron. These types of sintering assistants cause contamination of the obtained silicon carbide sintered compact with impurity elements such as boron, meaning the sintered compact cannot be used in the field of semiconductor device production. The composition of the present invention can be used to produce a silicon carbide sintered compact having the required shape and strength, without requiring the addition of this type of sintering assistant.

### - Preparation of Composition

The composition of the present invention can be prepared, for example, as a mixed powder, by dry mixing the aforementioned silicon carbide powder and organic binder. If necessary, water or a mixed liquid containing a plasticizer or a lubricant mixed with water may be added to the mixed powder, and the resulting mixture then mixed using a wet mixing device.
In those cases where the composition is subjected to press molding in the subsequent step, the composition is then dried to evaporate the water. In this case, the composition is preferably dried at a temperature of 80 to 150°C for a period of 1 to 10 hours. In those cases where the composition is subjected to extrusion molding, the wet composition mentioned above may be used without further modification as the green body, and in such a case, the water content within the composition is preferably within a range from 8 to 30 parts by mass per 100 parts by mass of the solid fraction.

### - Method of Producing Silicon Carbide Molded Product -

The method of producing a silicon carbide molded product according to the present invention comprises the steps of:
(1) molding the aforementioned silicon carbide powder composition to obtain a silicon carbide powder molded product,
(2) subjecting the silicon carbide powder molded product to a degreasing treatment, and
(3) subsequently subjecting the degreased silicon carbide powder molded product to sintering within a non-oxidizing atmosphere.

### - Step (1): Molding

In this step, the composition is molded. Examples of preferred molding methods include press molding and extrusion molding.

### -- Press Molding

In press molding, a molded product having a desired shape can be obtained, for example, by using the dry composition to fill a molding die, and then applying pressure to the die. Press molding is ideal for preparing molded products having complex shapes,

In the case of press molding, it is desirable that following typical press molding, the obtained molded product is subjected to CIP molding. In other words, first, the required composition is subjected to normal press molding at room temperature, and the pressure is then released. During this process, the pressure is preferably within a range from 50 to 200 kgf/cm² Next, the obtained molded product is pressurized using a Cold Isostatic Press (CIP). In CIP molding, the press molded item is placed inside a rubber mold having the same shape as the aforementioned molding die, and pressure is then applied uniformly from all surfaces on all sides of the mold, within a medium such as water. CIP molding enables a high-density molded product to be obtained. The applied pressure during this CIP molding is preferably within a range from 500 to 4,000 kgf/cm².

### -- Extrusion Molding

In extrusion molding, the aforementioned wet composition is supplied as the green body to an extrusion molding apparatus, the composition is extruded continuously from the apparatus die by rotating the screw inside the cylinder of the molding apparatus, and the extruded composition is then passed through a hollow, electrically heated hot-air oven having a length of 1 to 2 m that is positioned close to the die exit. This process enables a molded product having a desired shape to be obtained. Extrusion molding is ideal for performing continuous molding of long rod-shaped, pipe-shaped or belt-shaped products. The heating temperature within the electrically heated hot-air oven is typically within a range from 80 to 500°C, and preferably from 100 to 250°C, and the heating time may be selected within a range from 1 to 30 minutes.

### - Step (2): Degreasing Treatment

The molded composition is subjected to a degreasing treatment, thereby removing or thermally decomposing the organic binder. The degreasing treatment is performed by subjecting the molded product to a heat treatment within a non-oxidizing atmosphere at a temperature within a range from 400 to 1,500°C, and preferably from 600 to 1,200°C. The degreasing treatment causes a demineralization of the molded product. If the temperature of the heat treatment is too low, then the thermal decomposition and removal of the binder may not occur satisfactorily, whereas if the temperature is too high, the material of the heat treatment furnace may deform or melt in the case of a metal or alumina furnace.

This heat treatment is performed under a non-oxidizing atmosphere, and preferably under an inert gas atmosphere. Examples of the inert gas include nitrogen gas, argon gas and helium gas, and nitrogen gas is particularly desirable in terms of economic viability.

### - Step (3): Sintering

The molded product that has been subjected to the above degreasing treatment is then sintered under a non-oxidizing atmosphere at an even higher temperature. This heat treatment produces a uniform silicon carbide molded product. It is thought that during this sintering process, bonding occurs between particles of the silicon carbide powder, causing unification of the silicon carbide to proceed. The sintering is performed at a temperature exceeding 1,500°C but not more than 2,200°C. The temperature of this heating is preferably 1,600°C or higher. Further, the heating temperature is preferably not more than 2,200°C. A carbon furnace is ideal for this sintering, but if the temperature exceeds 2,200°C, then decomposition of the carbon base material of the furnace is severe.

In those cases where the silicon carbide molded product obtained in this manner contains a large amount of free carbon, this free carbon can be removed by subjecting the silicon carbide molded product to an additional heat treatment in the air. This heat treatment is typically performed in the air at a temperature of 400 to 1,000°C.

### Examples

A more detailed description of the present invention is presented below based on a series of examples, but the present invention is in no way limited by these examples.

### [Example 1]

### (Production of Silicon Carbide Powder)

### Materials:

(A) 100 parts by mass of a dimethylpolysiloxane containing alkenyl groups within each molecule, represented by a formula shown below:

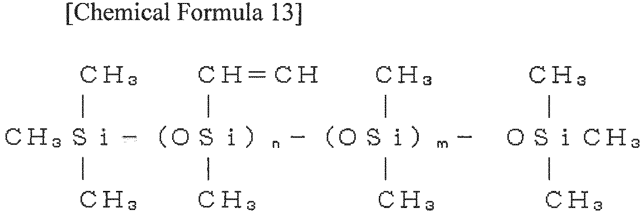

wherein n and m are numbers such that n/m = 4/1 and the viscosity of the siloxane at 25°C is 600 mPa·s.

(B) 0.5 parts by mass of benzoyl peroxide.
(C) 33 parts by mass of a diorganopolysilox containing hydrogen atoms bonded to silicon atoms, represented by a formula shown below.

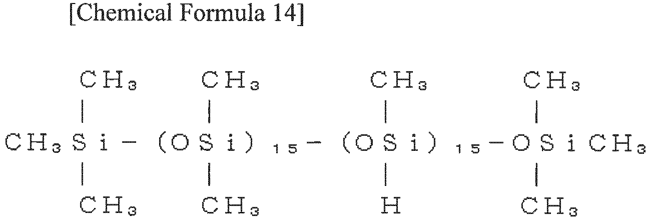

The above components (A) to (D) were combined in a planetary mixer (a registered trademark, a mixing device manufactured by Inoue Manufacturing Co., Ltd.), and were mixed for one hour at room temperature, yielding a curable silicone composition with a viscosity at room temperature of 100 mPa·s. This curable silicone composition was heat cured at 150°C for 5 minutes to obtain a silicone cured product.

This silicone cured product was placed in an alumina boat and heated inside an atmosphere furnace under a nitrogen gas atmosphere by raising the temperature from room temperature to 1,000°C at a rate of temperature increase of 100°C/hour over a period of approximately 10 hours, and was then held at 1,000°C for a further one hour. Subsequently, the cured product was cooled to room temperature at a rate of 200°C/hour. This process yielded a black inorganic powder composed essentially of carbon, silicon and oxygen.

This black inorganic powder was then placed in a carbon container, and in a carbon atmosphere furnace, under an argon gas atmosphere, the temperature was raised to 2,000°C over a 20-hour period at a rate of temperature increase of 100°C/hour. The temperature was then held at 2,000°C for two hours, and then cooled to room temperature at a rate of 200°C/hour. This process yielded a green silicon carbide powder.

### [Example 2]

### (Production of Silicone Carbide Molded Product)

100 parts by mass of the silicon carbide powder obtained in the example 1 and 3 parts by mass of methyl cellulose (product name: Metolose, manufactured by Shin-Etsu Chemical Co., Ltd.) as an organic binder were placed in the container of a vario-planetary ball mill P-4 (a registered trademark, a grinding mixer manufactured by Fritsch Japan Co., Ltd.) and mixed for one hour at room temperature. 20 parts by mass of water was added to the resulting mixture, and the wet mixture was placed in a planetary mixer (a registered trademark, a mixer manufactured by Inoue Manufacturing Co., Ltd.) and mixed for one hour at room temperature to obtain a green body. Subsequently, the green body was heated at 105°C over a 5-hour period to evaporate the water, thus yielding a powdered raw material composition.

This raw material composition was placed in a molding die and subjected to press molding for 5 minutes at a pressure of 100 kgf/cm², yielding a sheet-like molded product having dimensions of length: 40 mm × width: 40 mm × thickness: 2 mm. This molded product was then placed in a rubber mold, and subjecting to pressing for one hour at a pressure of 2,000 kgf/cm² using a CIP molding device Dr. CIP (a registered trademark, manufactured by Kobe Steel Group). The dimensions of the CIP molded product were length: 39 mm × width: 39 mm × thickness: 2 mm.

The thus obtained molded product was heated to 1,000°C under a nitrogen gas atmosphere and then cooled, yielding a black inorganic molded product composed essentially of carbon, silicon and oxygen. The dimensions of this inorganic molded product were length: 39 mm × width: 39 mm × thickness: 2 mm, and the shape was substantially the same as the shape prior to the heat treatment.

Subsequently, this black inorganic molded product was heated under an argon gas atmosphere by raising the temperature to 2,000°C and holding the temperature at 2,000°C, and was then cooled, yielding a green silicon carbide molded product. The dimensions of this silicon carbide molded product were length: 39 mm × width: 39 mm × thickness: 2 mm, and the shape was substantially the same as the shape of the aforementioned inorganic molded product.

### [Example 3]

### (Production of Silicone Carbide Molded Product)

100 parts by mass of the silicon carbide powder obtained in the example 1 and 6 parts by mass of methyl cellulose as an organic binder were mixed together in the same manner as that described in the example 2. To the thus obtained mixed powder were added 3 parts by mass of a lubricant oil (product name: Unilube, manufactured by NOF Corporation), 1 part by mass of glycerol (manufactured by Sigma-Aldrich Japan Co., Ltd.,) as a plasticizer and 20 parts by mass of water, and the resulting mixture was placed in a planetary mixer (a registered trademark, a mixer manufactured by Inoue Manufacturing Co., Ltd.) and mixed for one hour at room temperature to obtain a green body for use as a raw material composition.

This raw material composition was fed into an extrusion molding apparatus (product name: FM-P20, manufactured by Miyazaki Iron Works Co., Ltd.) and extruded continuously from a die having an outer diameter of 12 mm and an inner diameter of 9 mm, and the extruded composition was cut into segments having a length of 10 mm using a piano wire, thus forming pipe-shaped molded products having dimensions of outer diameter: 12 mm × inner diameter: 9 mm × length: 10 mm. These molded products were degreased and sintered in the same manner as that described in the example 2, yielding green silicon carbide molded products. The dimensions of these silicon carbide molded products were outer diameter: 11.5 mm × inner diameter: 9 mm × length: 10 mm, which is extremely similar to the dimensions following the aforementioned CIP molding, and the shape of the pipe-shaped products was also substantially the same.

### - Measurement of Elemental Ratio

When a portion was cut from the obtained silicon carbide molded product as a sample, and an oxygen analysis was performed using an oxygen analyzer (product name: TC436, manufactured by LECO Corporation), the oxygen content was not more than 0.2% by mass. The elemental ratio was Si₁C_{1.00}.

### - Analysis of Impurity Elements

When a simple prepared in the same manner as that described for the measurement of the elemental ratio was analyzed by ICP emission analysis, the results shown in Table 1 were obtained for the various element content values. A result of "<0.1" " indicates that the result was less than the detection limit of 0.1 ppm.

**[Table 1]**

| Analyzed element | Measured value (ppm) |
|---|---|
| Fe | <0.1 |
| Cr | <0.1 |
| Ni | <0.1 |
| Al | <0.1 |
| Ti | 0.1 |
| Cu | <0.1 |
| Na | 0.1 |
| Zn | <0.1 |
| Ca | 0.1 |
| Zr | <0.1 |
| Mg | <0.1 |
| B | <0.1 |

These results revealed that many of the impurity elements, including nickel, chromium, iron and aluminum, which are impurity elements that typically cause problems in the field of semiconductor devices, were less than the detection limit.

### [Comparative Example 1]

### (Production of Silicon Carbide Molded Product)

With the exception of replacing the silicon carbide powder obtained in the example 1 with a commercially available silicon carbide powder (product name: Shinano-Rundum, manufactured by Shinano Electric Refining Co., Ltd.), the same procedures as those described in the example 2 were used to prepare a raw material composition, perform press molding and CIP molding of the composition, and then perform degreasing and sintering, but the resulting product remained in a powdered state, and the molded shape could not be retained.

### [Comparative Example 2]

With the exception of replacing the silicon carbide powder obtained in the example 3 with a commercially available silicon carbide powder (product name: Shinano-Rundum, manufactured by Shinano Electric Refining Co., Ltd.), the same procedures as those described in the example 3 were used to prepare a raw material composition, mold the composition into a pipe shape using an extrusion molding apparatus, and then perform degreasing and sintering, but the resulting product was unable to maintain the pipe shape, and was obtained as a fine powder.

### Industrial Applicability

A silicon carbide powder composition of the present invention is useful for simply producing a molded product of complex shape composed of a high-purity silicon carbide sintered compact. This type of molded product is useful in the field of semiconductor device production.

## Claims

1. A silicon carbide powder composition, comprising a silicon carbide powder obtained by thermally decomposing a silicone cured product within a non-oxidizing atmosphere, and an organic binder.

2. The silicon carbide powder composition according to claim 1, wherein the composition does not comprise a sintering assistant.

3. The silicon carbide powder composition according to claim 1, wherein the composition is used as a green body for producing a silicon carbide molded product.

4. The silicon carbide powder composition according to claim 1, wherein the silicone cured product is obtained by curing a curable silicone composition.

5. The composition according to claim 4, wherein the curable silicone composition is an organic peroxide-curable silicone composition.

6. The composition according to claim 5, wherein the organic peroxide-curable silicone composition is a composition comprising:
(a) an organopolysiloxane containing at least two alkenyl groups bonded to silicon atoms,
(b) an organic peroxide, and
(c) as an optional component, an organohydrogenpolysiloxane containing at least two hydrogen atoms bonded to silicon atoms, in an amount that provides 0.1 to 2 mols of hydrogen atoms bonded to silicon atoms within the component (c) per 1 mol of alkenyl groups within the entire curable silicone composition.

7. The composition according to claim 4, wherein the curable silicone composition is a radiation-curable silicone composition.

8. The composition according to claim 7, wherein the radiation-curable silicone composition is an ultraviolet light-curable silicone composition comprising:
(d) an ultraviolet light-reactive organopolysiloxane, and
(e) a photopolymerization initiator.

9. The composition according to claim 8, wherein the ultraviolet light-reactive organopolysiloxane of the component (d) is an organopolysiloxane having at least two ultraviolet light-reactive groups, represented by a general formula (3a) shown below: 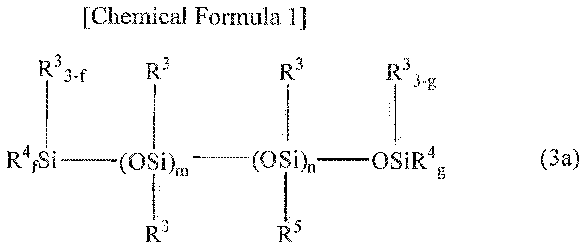 wherein R³ represents identical or different, unsubstituted or substituted monovalent hydrocarbon groups that do not have an ultraviolet light-reactive group, R⁴ represents identical or different groups having an ultraviolet light-reactive group, R⁵ represents identical or different groups having an ultraviolet light-reactive group, m represents an integer of 5 to 1,000, n represents an integer of 0 to 100, f represents an integer of 0 to 3, and g represents an integer of 0 to 3, provided that f+g+n≥2.

10. The composition according to claim 9, wherein each of the ultraviolet light-reactive groups is an alkenyl group, alkenyloxy group, acryloyl group, methacryloyl group, mercapto group, epoxy group or hydrosilyl group.

11. The composition according to claim 8, wherein the ultraviolet light-reactive organopolysiloxane of the component (d) is an organopolysiloxane having at least two ultraviolet light-reactive groups, represented by a general formula (3b) shown below: 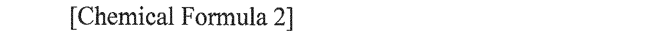 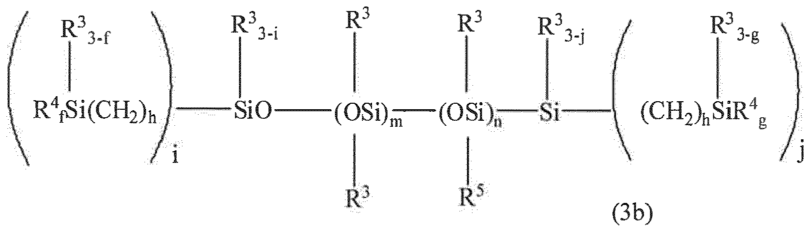 wherein R³ represents identical or different, unsubstituted or substituted monovalent hydrocarbon groups that do not have an ultraviolet light-reactive group, R⁴ represents identical or different groups having an ultraviolet light-reactive group, R⁵ represents identical or different groups having an ultraviolet light-reactive group, m represents an integer of 5 to 1,000, n represents an integer of 0 to 100, f represents an integer of 0 to 3, g represents an integer of 0 to 3, h represents an integer of 2 to 4, and i and j each represents an integer of 1 to 3, provided that fi+gj+n≥2.

12. The composition according to claim 11, wherein each of the ultraviolet light-reactive groups is an alkenyl group, alkenyloxy group, acryloyl group, methacryloyl group, mercapto group, epoxy group or hydrosilyl group.

13. The composition according to claim 8, wherein the component (e) is included in an amount of 0.01 to 10 parts by mass per 100 parts by mass of the component (d).

14. The composition according to claim 4, wherein the curable silicone composition is an addition-curable silicone composition.

15. The composition according to claim 14, wherein the addition-curable silicone composition is a composition comprising:
(f) an organopolysiloxane containing at least two alkenyl groups bonded to silicon atoms,
(g) an organohydrogenpolysiloxane containing at least two hydrogen atoms bonded to silicon atoms, in an amount that provides 0.1 to 5 mols of hydrogen atoms bonded to silicon atoms within the component (g) per 1 mol of alkenyl groups within the entire curable silicone composition, and
(h) effective amount of a platinum group metal-based catalyst.

16. The composition according to claim 4, wherein the curable silicone composition is a condensation-curable silicone composition.

17. The composition according to claim 16, wherein the condensation-curable silicone composition is a composition comprising:
(i) an organopolysiloxane containing at least two silanol groups or silicon atom-bonded hydrolyzable groups,
(j) as an optional component, a hydrolyzable silane, a partial hydrolysis-condensation product thereof, or a combination thereof, and
(k) as another optional component, a condensation reaction catalyst.

18. A method of producing a silicon carbide molded product, the method comprising:
molding the silicon carbide powder composition defined in claim 1 to obtain a silicon carbide powder molded product,
subjecting the silicon carbide powder molded product to a degreasing treatment, and
subsequently subjecting the degreased silicon carbide powder molded product to a sintering within a non-oxidizing atmosphere.

19. The method according to claim 18, wherein the degreasing treatment of the silicon carbide powder molded product is performed by conducting a heat treatment within a non-oxidizing atmosphere at a temperature within a range from 400 to 1,500°C.

20. The method according to claim 18, wherein the sintering of the degreased silicon carbide powder molded product is performed by conducting a heat treatment within a non-oxidizing atmosphere at a temperature exceeding 1,500°C but not more than 2,200°C.

21. The method of producing a silicon carbide molded product according to claim 18, wherein the silicon carbide powder composition is molded using a press molding method.

22. The method of producing a silicon carbide molded product according to claim 18, wherein the silicon carbide powder composition is molded using an extrusion molding method.

23. A silicon carbide molded product that is obtained using the method defined in claim 18.
